# EUROPÄISCHE PATENTSCHRIFT

(11) **EP 1 026 300 B1**
(45) Veröffentlichungstag und Bekanntmachung des Hinweises auf die Patenterteilung: **28.12.2005**
(21) Anmeldenummer: 00100024.9
(22) Anmeldetag: 04.01.2000
(51) Int. Cl.: D04B 35/28, F16N 13/22

(54) **Schmiereinrichtung für mehrere Schmierstellen**
Lubrication device for several lubrication points
Dispositif de lubrification pour plusieurs postes de graissage

(30) Priorität: 05.02.1999 DE 19904647
(43) Veröffentlichungstag der Anmeldung: 09.08.2000
(73) Patentinhaber: Memminger-IRO GmbH, 72280 Dornstetten (DE)
(72) Erfinder: Huss, Rolf, 72990 Lossburg (DE)
(74) Vertreter: Rüger, Barthelt & Abel Patentanwälte

(56) Entgegenhaltungen:
- DE-A- 4 021 557
- DE-C- 908 689
- FR-A- 1 094 985
- GB-A- 1 502 920
- JP-A- 179 799
- US-A- 4 944 367

## Beschreibung

Die Erfindung betrifft eine Schmiereinrichtung für mehrere Schmierstellen, insbesondere zur Schmiermittelversorgung von Schmierstellen einer Strickmaschine, vorzugsweise mit Öl, gemäß dem Oberbegriff des Patentanspruchs 1.

Bspw. bei Strickmaschinen bedarf der Nadelantrieb einer dauernden Schmierung, was in gleicher Weise auch für die Nadelführung im Nadelbett oder Nadelzylinder usw. gilt. Gerade bei den modernen, schnelllaufenden Strickmaschinen kommt einer einwandfreien, regelmäßigen Schmierung eine sehr große Bedeutung zu. Die Schmierstellen müssen zuverlässig mit Öl versorgt werden. Ausfall der Schmierung hat in der Regel erhöhten Verschleiß und alsbaldigen Ausfall der Strickmaschine zur Folge. Andererseits hat die Schmierung sparsam zu erfolgen. Eine Überversorgung der Schmierstellen mit Öl ist unzweckmäßig. Deshalb werden entsprechende Strickmaschinen vielfach mit so genannten Druckölern oder Druckölschmiersystemen ausgerüstet, die von einer zentralen Stelle aus über entsprechende Leitungen Öl unter Druck zu den einzelnen Schmierstellen fördern.

Dazu ist bspw. aus der EP 0499810 B1 eine Schmiereinrichtung bekannt, die eine zuverlässige und dosierte Schmierung von mehreren Schmierstellen gestattet. Die Schmiereinrichtung weist einen Schmiermittelbehälter auf, in dem eine Kolbenpumpe untergebracht ist. Der Ausgang der Kolbenpumpe ist an ein motorgetriebes Verteilerventil angeschlossen, um den Ausgang der Pumpe mit jeweils einer Schmierstoffleitung zu verbinden, die aus einer Gruppe von Schmierstoffleitungen ausgewählt ist.

Aus der FR-A-1094985 ist eine Schmiereinrichtung mit einer elektrischer regten Kolbenpumpe bekannt, deren Pumpzylinder mehrere abgehende Schmierleitungen aufweist. Durch eine Axialbewegung des Kolbens wird verdrängtes Öl somit auf die Schmierleitungen geleitet. Ein Motorschaltwerk ist dabei dazu vorgesehen, den Schwingankerantrieb von Zeit zu Zeit zu erregen.

Ein Schmieren lediglich einzelner Schmierstellen ist damit nicht möglich.

Des Weiteren ist aus der JP-A-179799 eine Schmiereinrichtung bekannt, die einen Pumpzylinder mit mehreren radial abgehenden Schmierleitungen aufweist. In dem Pumpzylinder ist ein Kolben sowohl axial verschiebbar als auch drehbar gelagert. Der Kolben weist einen Steuerkanal auf, um das Pumpvolumen mit einem seiner Drehstellung entsprechenden abgehenden Ölkanal zu verbinden. Eine Antriebseinrichtung ist dazu vorgesehen, den Kolben sowohl kontrolliert zu drehen, um die abgehenden Leitungen nach einander zu aktivieren, als auch den Kolben axial zu verschieben, um das Pumpen zu bewirken.

Zu der Antriebseinrichtung gehört ein an seinem Umfang mit einer wellenförmigen Nut versehener Zylinder, der axial fest mit dem Kolben verbunden ist. Der Kolben weist gegenüber dem Zylinder jedoch ein großes Drehspiel auf. Ein Federelement spannt den Kolben in Drehrichtung vor, wenn der Zylinder gedreht wird. Mit dem Kolben ist ein Radialarm verbunden, dem sechs an dem Umfang der Antriebseinrichtung angeordnete Hemmschrauben zugeordnet sind. Der Radialarm stößt an der zylindrischen Mantelfläche dieser Hemmschrauben an. Am oberen sowie unteren Ende kann er jedoch vorbeigehen.

Diese Antriebseinrichtung erzwingt die Schmierung der Schmierstellen in fest gelegter Reihenfolge: Eine variable Schmierung der einzelnen Schmierstellen ist somit nicht möglich.

Davon ausgehend ist es Aufgabe der Erfindung, eine vereinfachte Schmiereinrichtung zu schaffen. Außerdem ist es Aufgabe der Erfindung, ein verbessertes Schmierverfahren zu schaffen.

Diese Aufgabe wird mit der Schmiereinrichtung nach Anspruch 1 bzw. ein Verfahren nach Anspruch 15 gelöst.

Bei der erfindungsgemäßen Schmiereinrichtung ist eine Verteilereinrichtung vorgesehen, mit der von einer Pumpe geliefertes Schmiermittel auf ausgewählte Leitungen verzweigt und somit ausgewählten Schmierstellen zugeführt werden kann. Die Verteilereinrichtung und die Pumpeinrichtung sind dabei zu einer Einheit zusammengefasst. Durch das Zusammenfassen von Verteilereinrichtung und Pumpeinrichtung zu einer Einheit vereinfacht sich der Aufbau der Schmiereinrichtung erheblich. Außerdem kann die Ansteuerung der Schmiereinrichtung vereinfacht werden.

Die Pumpeinrichtung ist als Kolbenpumpe ausgebildet und weist einen in einem Zylinder axial verschiebbaren Kolben auf. Dieser dient zusammen mit dem Zylinder als Pumporgan. Außerdem sind der Zylinder und der Kolben als Steuerorgan ausgebildet. Dazu ist er in dem Zylinder drehbar gelagert und mit Steuerflächen oder -kanälen versehen, denen in dem Zylinder angeordnete Steuerschlitze oder Auslässe zugeordnet sind. Der Kolben kann an seiner Mantelfläche mit wenigstens einem Steuerkanal versehen sein, der so ausgebildet ist, dass er durch entsprechende Drehpositionierung des Kolbens jeweils in Übereinstimmung mit wenigstens einem der Auslasskanäle bringbar ist. Bedarfsweise kann die Anordnung auch so getroffen sein, dass der Steuerkanal mit mehreren Auslasskanälen in Übereinstimmung überführbar ist. Der Steuerkanal und die Auslasskanäle sind dabei so angeordnet, dass der von dem Kolben in dem Zylinder definierte Arbeitsraum über den gesamten Hub des Kolbens mit dem jeweils ausgewählten Auslasskanal in Verbindung steht. Auf diese Weise kann das gesamte, von dem Kolben verdrängte Ölvolumen in den Auslasskanal gefördert werden. Die derart ausgebildete Kolbenpumpe ist zugleich Pumpeinrichtung und Verteilereinrichtung.

Die Pumpeinrichtung und die Verteilereinrichtung ist mit einer Antriebseinrichtung verbunden, die das Drehen und das Verschieben des Kolbens bewirkt. Die Verschiebebewegung ist eine Pumpbewegung, so dass der Verschiebeantrieb einen Pumpantrieb bildet. Die Drehbewegung des Kolbens hat, wenn keine Verschiebebewegung erfolgt, keine Volumenänderung in dem Zylinder zur Folge, wodurch von der Drehbewegung nur die Sperrung bzw. Freigabe von Auslasskanälen gesteuert wird. Der Drehantrieb ist somit ein Verteilerantrieb und der Kolben ist insoweit ein Steuerschieber. Durch Drehen und Verschieben des Kolbens kann somit jeweils unabhängig das Pumpen und Umschalten bewirkt werden. Dies kann durch separate Antriebseinrichtungen oder durch eine kombinierte Antriebseinrichtung erfolgen, die sowohl eine Dreh- als auch eine Verschiebebewegung erzeugen kann.

Zum Drehen des Kolbens wird vorzugsweise ein Schrittmotor verwendet, der eine gewünschte Dreh-Stellbewegung erzeugt. Vorzunehmende Drehpositionierungen zur Auswahl eines Auslasskanals und somit zur Aktivierung einer Schmierstelle sind mit einem Schrittmotor einfach durchführbar. Von diesem Schrittmotor kann jedoch auch die Verschiebebewegung des Kolbens hergeleitet werden. Dazu ist dieser über eine Kupplung mit dem Schrittmotor oder anderweitigem Stellmotor verbunden, die zunächst ein eingestelltes oder einstellbares Drehspiel zulässt, wobei die Relativdrehung innerhalb des Drehspiels mit einem Getriebemittel in die gewünschte Linearbewegung umgesetzt wird.

Der Drehwinkel des Drehspiels kann zur Erzeugung einer Linearbewegung ausgenutzt werden. Dazu ist der Kolben mit einer Sperreinrichtung verbunden, die den Kolben in beliebigen oder ausgewählten Drehstellungen unverdrehbar hält, ohne seine Axialverschiebung zu blockieren. Z.B. kann diese Sperreinrichtung durch ein Sperr-Rad gebildet sein, das mit einem Sperrglied in und außer Eingriff bringbar ist. Dies erfolgt vorzugsweise durch geeignete Radialbewegung des Sperrglieds, bspw. mittels eines Zugmagneten. Bei drehfest gehaltenem Kolben ist eine Drehung des Schrittmotors im Rahmen des Drehspiels der Kupplungseinrichtung möglich. Vorzugsweise ist die Verschiebeeinrichtung nun durch ein Getriebe gebildet, das diese Relativdrehung zwischen dem Kolben und der Dreheinrichtung in eine Linearbewegung des Kolbens umsetzt.

Bei einer besonders langlebigen und einfachen Ausführungsform ist das Sperr-Rad als Ratschen-Rad ausgebildet. Das Sperrelement wirkt dann als Sperr-Klinke, die eine Drehung der Sperr-Rads in einer ausgewählten Richtung zulässt. Zusätzlich kann die Sperr-Klinke, bspw. mittels eines Hubmagneten, freigebbar sein, um die andere Drehrichtung des Sperr-Rads zuzulassen. Eine so beschaffene Einrichtung ermöglicht den normalen Betrieb der Schmiereinrichtung mit sehr wenigen Betätigungen des bspw. verwendeten Hubmagneten zur Freigabe und zum Sperren der Sperr-Klinke. Dies ermöglicht selbst bei Verwendung einfacher und kostengünstiger Hubmagnete eine lange Lebensdauer.

Das Getriebe kann durch zwei miteinander in Eingriff befindliche Gewindeelemente gebildet sein. Die Steigung des Gewindes der Gewindeelemente ist dabei so bemessen, dass durch die Relativdrehung zwischen Kolben und Stellmotor im Rahmen des Drehspiels der Kupplungseinrichtung ein vollständiger Kolbenhub durchlaufen wird. Durch Vorwärts- bzw. Rückwärtsdrehung des Stellmotors ist der Kolben hin bzw. her bewegbar.

Bedarfsweise können als Getriebemittel auch andere Einrichtungen dienen. Bspw. kann es zweckmäßig sein, ein Kurvengetriebe vorzusehen, das eine Hin- und Herbewegung des Kolbens bei Drehung des Drehantriebs in einer einzigen vorgegebenen Richtung ermöglicht. Ein solches Kurvengetriebe kann durch eine in der Wandung einer Buchse vorgesehene wellenförmige Ringnut gebildet sein, in der ein von dem Stellmotor angetriebener, sich in Radialrichtung erstreckender Stift oder Finger läuft.

Das die Linearbewegung erzeugende Getriebe ist vorzugsweise vorgespannt. Dies kann bspw. mittels eines Magneten geschehen, der aneinander gleitende Flanken des Getriebes in Anlage hält. Dies ist insbesondere im Hinblick auf die korrekte Dosierung des Schmiermittels von Vorteil. Kehrt der Antrieb seine Drehrichtung um, um z.B. von einem Kolben-Hinhub zu einem Kolben-Rückhub zu wechseln, sind die Umkehrpunkte genau festgelegt und Fehldosierungen werden vermieden.

Die aus dem Zylinder herausführenden Auslasskanäle und ein Einlasskanal sind vorzugsweise jeweils mit Rückschlagventilen versehen. Die Pumpeinrichtung kommt damit ohne weitere Steuermittel aus. Die Rückschlagventile sind vorzugsweise automatische, von dem anliegenden Differenzdruck, gesteuerte Ventile. Sonstige Ventilsteuereinrichtungen sind nicht erforderlich.

Zur Überwachung des ordnungsgemäßen Betriebs der Schmiereinrichtung kann eine Sensoreinrichtung vorteilhaft sein, die die Hubbewegung des Kolbens erfasst und überwacht. Es kann dabei genügen, zu überwachen, ob der Kolben einen bestimmten Hub erreicht oder nicht. Ist bspw. ein Schmierkanal verstopft, kann der Kolben kein Schmiermittel in diesen Kanal pumpen und blockiert. Er erreicht dann den Schaltpunkt der Sensoreinrichtung nicht, die dies erfasst und die entsprechende Maschine abschaltet.

Unabhängig von dem konkreten Aufbau der Pumpeinrichtung, etwaiger Verteilereinrichtungen und angeschlossener Leitungen sowie der Anzahl angeschlossener Schmierstellen ist es zweckmäßig, den Pumpendruck während einzelner Schmierimpulse zu modulieren. Wird als Antrieb für die Pumpe ein Schrittmotor verwendet, können dessen Einzelschritte in Mikropumpimpulse umgesetzt werden, deren Folge einen Schmierimpuls bildet. Die Pausen zwischen einzelnen Mikropumpimpulsen werden zweckmäßigerweise derart bemessen, dass der Druck in den Leitungen einen Minimalgrenzwert nicht unterschreitet. Der Minimaldruck ist vorzugsweise etwas geringer als der erforderliche Spritzdruck der angeschlossenen Düsen. Er genügt, etwaige Nachgiebigkeiten (Elastizitäten) der Leitungen unter Vorspannung zu halten. Dadurch wird es möglich, besonders geringe Schmiermittelmengen zu dosieren oder den Schmiervorgang zeitlich zu dehnen.

Weitere Einzelheiten vorteilhafter Ausführungsformen der Erfindung sind Gegenstand von Unteransprüchen. In der Zeichnung sind Ausführungsformen der Erfindung veranschaulicht. Es zeigen:
Fig. 1 die Schmiereinrichtung, in einer schematisierten perspektivischen Darstellung,
Fig. 2 die Schmiereinrichtung nach Figur 1, in einer ausschnittsweisen Schnittdarstellung und in einem anderen Maßstab,
Fig. 3 eine zu der Schmiereinrichtung gehörige Pump- und Steuereinrichtung, in einer Horizontalschnittdarstellung,
Fig. 4 eine zu der Schmiereinrichtung nach Figur 2 gehörige Antriebseinrichtung, in einer Horizontalschnittdarstellung,
Fig. 5 ein zu der Antriebseinrichtung nach Figur 4 gehöriges Sperr-Rad in Draufsicht,
Fig. 6 eine zu der Antriebseinrichtung nach Figur 4 gehörige Kupplungseinrichtung, in einer Horizontalschnittdarstellung,
Fig. 7 eine zu der Schmiereinrichtung nach Figur 2 gehörige Pumpeinrichtung mit zugehöriger Kupplungseinrichtung, zugehörigem Sperr-Rad und einem Gewindeelement zur Erzeugung einer Linearbewegung,
Fig. 8 den zeitlichen Verlauf des Spritzdrucks, des einer Spritzdüse zufließenden Ölstroms und des von der Spritzdüse abgegebenen Ölstroms, als Diagramm,
Fig. 9 eine abgewandelte Ausführungsform einer Sperreinrichtung mit als Ratsche ausgebildetem Sperr-Rad, in einer schematisierten Draufsicht, und
Fig. 10 eine weitere abgewandelte Ausführungsform einer Sperreinrichtung mit als Ratsche ausgebildetem Sperr-Rad, in einer schematisierten Draufsicht.

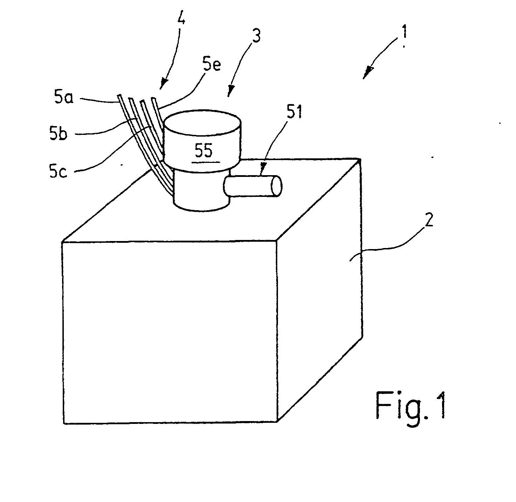

In Figur 1 ist eine Schmiereinrichtung 1 veranschaulicht, zu der ein Vorratsbehälter 2 für Schmiermittel, bspw. Öl, gehört. In den Vorratsbehälter 2 ist eine Verteiler- und Pumpeinheit 3 eingesetzt, die an eine Gruppe 4 wegführender Schmiermittelleitungen 5a bis 51 zu vorbestimmten Zeitpunkten vorgegebene Schmiermittelportionen abgibt.

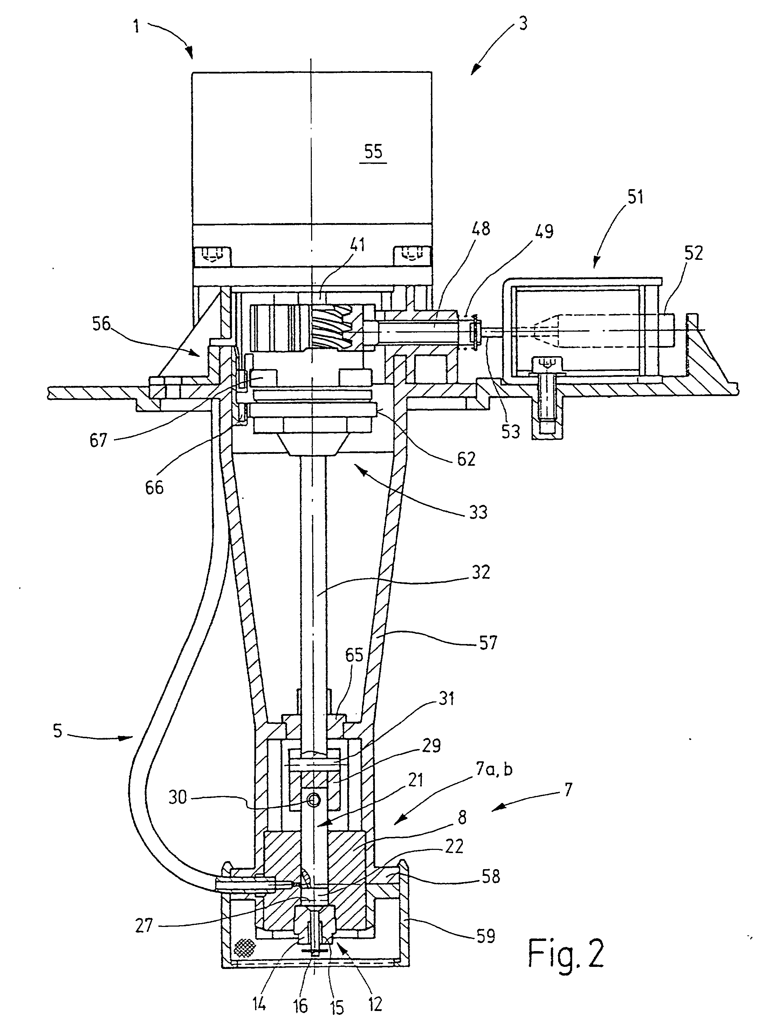

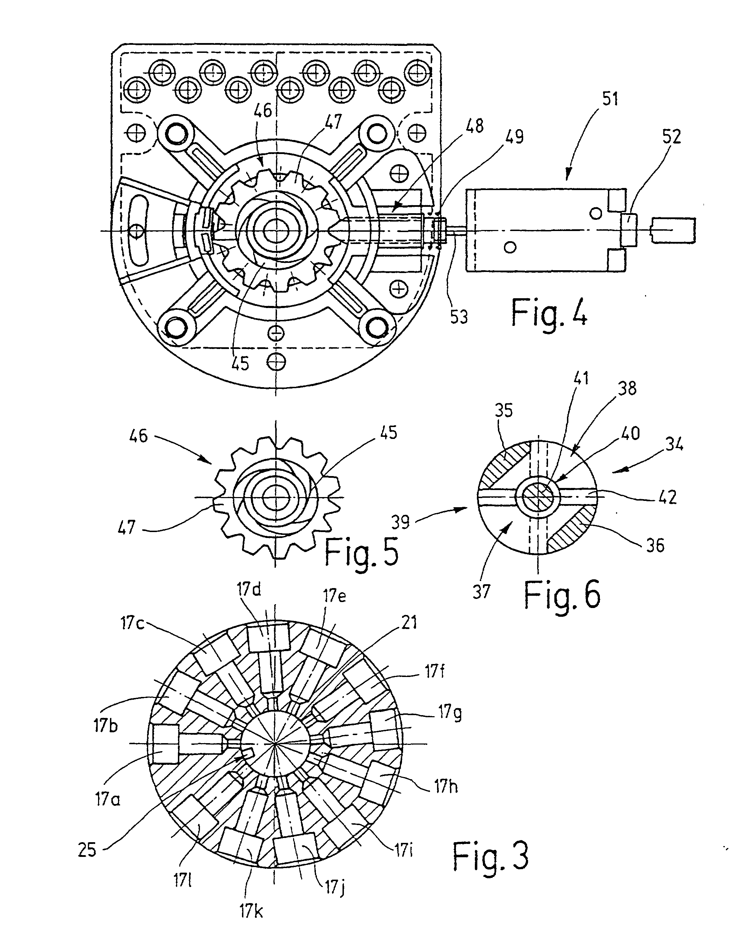

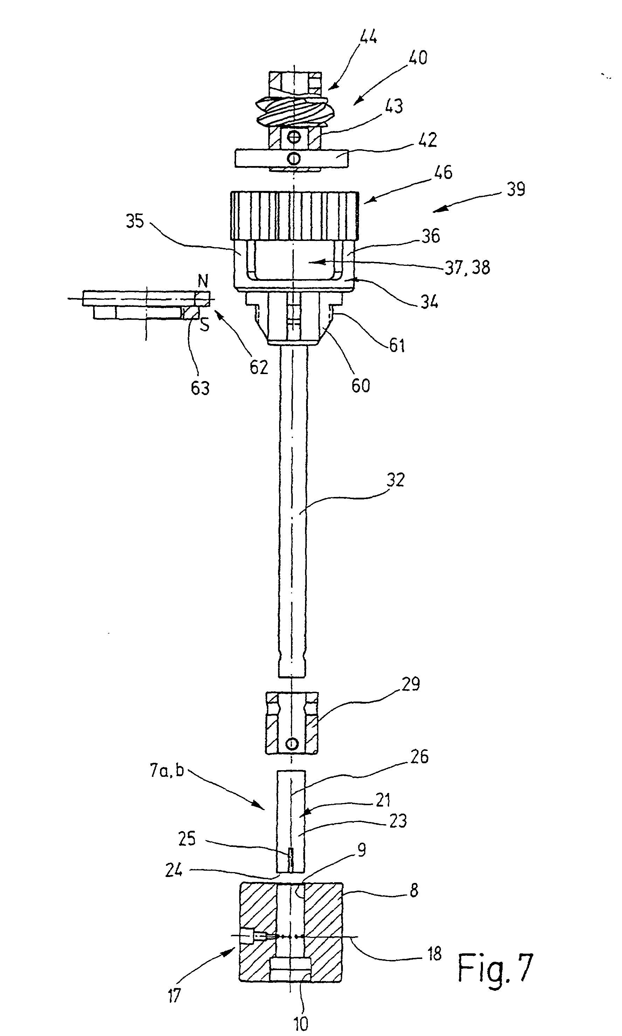

Die in Figur 1 schematisch angedeutete Pump- und Verteilereinheit 3 ist in Figur 2 gesondert veranschaulicht. Zum Fördern und Zuteilen des Schmiermittels dient eine Kolbenpumpe 7, die zugleich Pumpeinrichtung 7a und Verteilereinrichtung 7b ist. Zu der Kolbenpumpe 7 gehört, wie insbesondere aus den Figuren 3 und 7 hervorgeht, ein Zylinderkörper 8 mit einer zylindrischen Durchgangsbohrung 9. Die Durchgangsbohrung 8 ist an einem, in den Figuren 2 und 7 unteren Ende als Stufenbohrung ausgebildet, indem sie einen Abschnitt 10 mit vergrößertem Durchmesser aufweist. Dieser dient der Aufnahme eines Rückschlagventils 12, dessen Ventilkörper 14 bspw. in ein entsprechendes Gewinde des Abschnitts 10 eingeschraubt ist.

Der Ventilkörper 14 ist mit einem Durchgangskanal 15 zur Aufnahme eines Ventilverschlussglieds 16 versehen. Der Kopf des Ventilverschlussglieds 16 weist zu dem von der Durchgangsbohrung 9 festgelegten Innenraum des Zylinderkörpers 8. Bedarfsweise kann eine nicht weiter veranschaulichte Feder das Ventilverschlussglied gegen einen an dem Ventilkörper 14 ausgebildeten Ventilsitz spannen.

Der Ventilkörper 8 ist mit mehreren, im vorliegenden Beispiel zwölf Radialbohrungen 17 (17a bis 17l; Figur 3) versehen, die in einer gemeinsamen Ebene 18 angeordnet sind, auf der die Durchgangsbohrung 9 senkrecht steht. Die Radialbohrung 17a bis 171 sind in gleichen Winkelabständen zueinander angeordnet, während der Abstand zwischen der Radialbohrung 171 und der Radialbohrung 17a etwas größer ist als die ansonsten einheitlichen Abstände zwischen den Radialbohrungen 17a bis 171. In die Radialbohrungen 17 (Bezugnahme ohne Buchstabenindex bezeichnet alle Radialbohrungen 17a bis 171 gleichermaßen) sind nicht weiter veranschaulichte Rückschlagventile eingesetzt, die einen Fluidstrom in Radialrichtung nach außen, d.h. aus der Durchgangsbohrung 9 durch den von der jeweiligen Radialbohrung 17 gebildeten Auslasskanal nach außen, nicht aber zurück, zulassen.

An die Auslassventile sind die Schmiermittelleitungen 5a bis 51 angeschlossen, die zu den Schmierstellen führen. Die Rückschlagventile können bedarfsweise auch an einem der Verteilereinrichtung 7b fernliegenden Ende der jeweiligen Leitung 5a bis 51 vorgesehen werden, wobei dann in die Radialbohrungen 17 jeweils lediglich Anschlussnippel eingeschraubt sind.

In die Durchgangsbohrung 9 ist ein Kolben 21 eingesetzt, dessen Außendurchmesser im Wesentlichen mit dem Innendurchmesser der Durchgangsbohrung 9 übereinstimmt, so dass der Kolben zwar axial verschiebbar und drehbar in der Durchgangsbohrung 9 sitzt, mit dieser jedoch relativ dicht einen Arbeitsraum 22 begrenzt (Figur 2). Der Kolben 21 weist neben seiner zylindrischen Mantelfläche 23 eine weitgehend plane Stirnfläche 24 auf. Ausgehend von der Stirnfläche 24 erstreckt sich eine Steuernut 25 parallel zu seiner Mittelachse 26 über die Mantelfläche. Die Länge der Steuernut 25 ist dabei vorzugsweise genauso groß bzw. etwas größer wie der Abstand der Ebene 18 von einem "oberen" Kolbentotpunkt 27, der in Figur 2 durch eine gestrichelte Linie angedeutet ist. Der Kolben 21 erreicht den oberen Totpunkt 27 mit seiner Stirnfläche 24, wenn der Arbeitsraum 22 am kleinsten, d.h. der Kolben 21 in Figur 2 in seiner untersten Position befindlich ist.

Die Steuernut 25 ist, wie Figur 3 veranschaulicht, relativ schmal ausgebildet und erstreckt sich in Umfangsrichtung an der Mantelfläche 23 über einen Umfangsbereich, der etwa mit dem Durchmesser der Radialbohrungen 17 an der Wandung der Durchgangsbohrung 9 übereinstimmt. Die Tiefe der Steuernut 25 ist so bemessen, dass der Strömungswiderstand in der Steuernut 25 nicht wesentlich größer ist als in den Radialbohrungen 17.

Der Kolben 21 ist an seinem aus dem Zylinderstück 8 heraus ragenden Ende in einer Anschlussmuffe 29 gefasst und mit dieser verstiftet (Stift 30). Außerdem ist die Anschlussmuffe 29 über einen weiteren Stift 31 mit einer Betätigungsstange 32 verbunden, die zu einer Antriebseinrichtung 33 führt. Die Betätigungsstange 32 ist drehfest und in Axialrichtung fest mit einer Kupplungshälfte 34 verbunden, die zwei sich in Axialrichtung erstreckende sowie parallel und im Abstand zueinander angeordnete Stege 35, 36 aufweist. Zwischen diesen sind Fenster 37, 38 ausgebildet, die insbesondere aus Figur 6 ersichtlich sind.

Die Kupplungshälfte 34 gehört zu einer Kupplungseinrichtung 39, deren andere Kupplungshälfte 40 von einem von einer Welle 41 angetriebenen Radialstift 42 gebildet wird. Dieser greift mit seinen beiden Enden in die Fenster 37, 38 und kann jeweils nach Durchlaufen eines gewissen, hier auf 90° festgelegten, Drehspiels mit jeweils einer Flanke der Stege 35, 36 in Berührung kommen.

Die Welle 41 trägt außerdem eine aus Figur 7 ersichtliche Buchse 43, die die Verbindung zu dem Radialstift 42 herstellt und die an ihrer Außenseite mit einem Gewindeelement 44 versehen ist. Dieses weist ein mehrgängiges Außengewinde auf. Seine Steigung ist so bemessen, dass über 90° des Umfangs des Gewindeelements 44 in Axialrichtung ein Weg zurückgelegt wird, der dem vollständigen Kolbenhub des Kolbens 21 entspricht.

Das Gewindeelement 44 steht in Betrieb mit einem Gewindeelement 45 in Verbindung, das aus Figur 5 ersichtlich und in einem ringförmigen, von den Stegen 35, 36 der Kupplungshälfte 34 getragenen Element oder Abschnitt ausgebildet ist. Damit verändert die Kupplungshälfte 34 bei Durchlaufen des Drehspiels der Kupplung 39 ihre Axialposition gegenüber der Kupplungshälfte 40.

Der mit dem Innengewinde (Gewindeelement 45) versehene Abschnitt der Kupplungshälfte 34 ist an seiner Außenseite als Sperr-Rad 46 ausgebildet. Dieses weist sich in Axialrichtung erstreckende, im Querschnitt etwa trapezförmige, Zähne 47 auf, die dazu dienen, die Kupplungshälfte 34 drehfest, jedoch axial verschiebbar zu arretieren. Dies ist aus Figur 4 entnehmbar. Radial zu dem Sperr-Rad 46 ist ein Sperr-Riegel 48 verschiebbar gelagert. Der Sperr-Riegel 48 ist durch eine Druckfeder 49 auf seine radial äußere Lage hin vorgespannt, in der er nicht mit dem Sperr-Rad 46 in Eingriff steht. Ein Hubmagnet 51 dient dazu, mit seinem Anker 52 über eine entsprechende Stange 53 den Sperr-Riegel 48 in Eingriff mit dem Sperr-Rad 46 zu bringen, so dass dessen Drehung in von den Zähnen 47 vorgegebenen diskreten Positionen blockiert wird. Diese Blockier- oder Sperrpositionen entsprechen jeweils Drehpositionen, bei denen die Steuernut 25 (Figur 3) mit einer der Radialbohrungen 17 fluchtet. Entsprechend sind dreizehn Zahnzwischenräume vorhanden, von denen zwölf den Positionen der Radialbohrungen 17 und die dreizehnte, dem größeren Zwischenraum zwischen den Radialbohrungen 171 und 17a entsprechen. Die Größe der Zahnzwischenräume entspricht der Größe der Abstände der Radialbohrungen 17.

Die Kupplungshälfte 40 ist mit der Welle 41 drehfest verbunden, die die Abtriebswelle eines Schrittmotors 55 bildet. Dieser ist koaxial zu der Betätigungsstange 32 ausgerichtet und von einem entsprechenden Halter 56 getragen. Der mehrteilig ausgebildete Halter 56 trägt außerdem den Hubmagneten 51 und weist einen rohrförmigen, sich verjüngenden, koaxial zu der Betätigungsstange 32 angeordneten Fortsatz 57 auf, der an seinem unteren freien Ende die Pumpeinheit 7 trägt. Er weist hier einen flanschartigen Fortsatz 58 auf, an dem die Schmierstoffleitungen 5 gehalten sein können und der außerdem ein Mikrosieb 59 trägt. Dieses ist topfartig ausgebildet und umschließt das untere Ende des Fortsatzes 57. Somit muss der dem Einlassventil 12 zuströmende Schmierstoff das Mikrosieb 59 passieren womit er gefiltert wird.

Die Kupplungshälfte 34 ist an ihrer der Betätigungsstange 32 zugewandten Seite mit einer Nabe 60 versehen, die ein Außengewinde 61 aufweist. Auf der Nabe 60 ist ein in Figur 7 separat dargestellter ringförmiger axial polarisierter Dauermagnet 62 mittels einer Mutter 63 gehalten, für die das Außengewinde 61 vorgesehen ist. Der Dauermagnet 62 erzeugt mittels seines Magnetfelds eine Kraft, die das Gewindeelement 44 mit dem Gewinde 45 spielfrei in Eingriff hält. Dies dient dazu, bei Drehrichtungsumkehr des Schrittmotors 55 einen unerwünschten Leergang in dem Getriebe zu vermeiden, das von dem Gewindeelement 44 und dem Innengewinde 45 gebildet ist und zur Umsetzung einer Drehbewegung in eine Linearbewegung dient.

Die Betätigungsstange 32 ist an dem Fortsatz 57 in einer Buchse 65 gelagert, die der Verbindungsmuffe 29 benachbart in einer entsprechenden Zwischenwand des Fortsatzes 57 angeordnet ist. Die Buchse 65 lässt eine Dreh- und eine Axialbewegung der Betätigungsstange 32 zu.

Zur Überwachung der Bewegung des Kolbens 21 ist an der Innenseite des Fortsatzes 57 dem Permanentmagneten 62 benachbart, ein magnetischer Sensor, bspw. ein Hallsensor 66 angeordnet, der die Position des Permanentmagneten 62 erfasst und wenigstens das Über- oder Unterschreiten einer Schaltposition unterscheidet. Bedarfsweise kann ein weiterer Hallsensor oder ein anderweitiger Positionssensor 67 in Nachbarschaft des Querstifts 42 vorgesehen sein, um dessen Position zu erfassen. Sowohl die Hallsensoren 66, 67 als auch der Schrittmotor 55 und der Hubmagnet 51 sind an eine Steuereinrichtung angeschlossen, die die Schmiereinrichtung 1 wie folgt steuert:

Zur Beschreibung des ordentlichen Betriebs wird angenommen, dass der Kolben 21 zunächst in der Figur 3 veranschaulichten Position steht und sich der Sperrriegel 48 infolge einer Ansteuerung des Zugmagneten 51 mit dem Sperr-Rad 46 in Eingriff befindet (Figur 4). Ist das Gewinde des Gewindeelements 44 ein Rechtsgewinde, wird der Schrittmotor 55 nun, zumindest falls sich der Querstift 42 noch nicht in der in Figur 6 dick dargestellten Position befindet, so gedreht, dass der Querstift 42 im Uhrzeigersinne geschwenkt wird. Bspw. wird er aus der in Figur 6 gestrichelt dargestellten Position in die in dick ausgezogenen Linien dargestellte Position überführt. Beim Durchlaufen dieses Wegs hebt das in Axialrichtung festgehaltene Element 44 die Kupplungshälfte 34 in Axialrichtung so an, dass der Kolben 21 eine Ansaugbewegung vollführt. Der Arbeitsraum 22 vergrößert sich und über das Einlassventil 12 strömt Schmiermittel, bspw. Öl in den Arbeitsraum 22 ein.

Das Sperr-Rad 46 ist dabei drehfest gehalten. Spätestens wenn der Querstift 42 an den Stegen 35, 36 anläuft, stoppt der Schrittmotor 55. Es wird nun der Zugmagnet 51 entregt, wodurch das Sperr-Rad 46 frei wird. Der Schrittmotor 55, der bis hierhin dazu gedient hat, dem Kolben 21 eine Hubbewegung zu erteilen, positioniert nun das jetzt frei drehbare Sperr-Rad 46 um einen Zahn weiter. Dabei nimmt der Querstift 42 die Stege 35, 36 und somit die Kupplungshälfte 34 mit. Die Steuernut 25 wird dadurch in Übereinstimmung mit der Radialbohrung 17a überführt. Ist diese Position erreicht, wird der Zugmagnet 51 wieder angesteuert und drückt dadurch den Sperrriegel 48 in den entsprechenden Zahnzwischenraum des Sperr-Rads 46. Dieses wird dadurch wiederum drehfest gehalten.

Zur Abgabe einer gewünschten Schmierstoffportion an der Schmierstoffleitung 5a wird nun der Schrittmotor 55 in Gegenuhrzeigersinne angesteuert. Infolge der Größe der Fenster 37, 38 ist die Drehbewegung hier auf eine viertel Umdrehung begrenzt. Durchläuft der Schrittmotor 55 diesen Weg, wird diese Drehbewegung durch Wechselwirkung des Gewindeelements 44 mit dem Innengewinde 45 in eine in Figur 2 nach unten gerichtete Axialbewegung der Kupplungshälfte 34 umgesetzt. Über die Betätigungsstange 32 wird der Kolben 21 ohne dabei zu drehen nach unten in Richtung auf seinen oberen Totpunkt 27 hin bewegt. Entsprechend wird das verdrängte Öl an der Schmierstoffleitung 5a abgegeben. Es muss dabei nicht der gesamte, zur Verfügung stehende Weg, durchlaufen werden. Der Schrittmotor 55 kann gestoppt werden, bevor er ein viertel Drehung durchlaufen hat. Entsprechend wird dann eine geringer Ölmenge abgegeben. Dadurch ist eine Feindosierung der abzugebenden Ölportionen möglich.

Ist die Abwärtsbewegung des Kolbens 21 beendet, wird der Schrittmotor 55 wieder im Uhrzeigersinn betätigt, bis der Querstift 42 wieder an den Stegen 35, 36 anläuft. Es wird nun der Zugmagnet 51 freigegeben, wodurch die Druckfeder 49 den Sperrriegel 48 radial nach außen bewegt und das Sperr-Rad 46 freigibt. Der Schrittmotor kann nun unter Mitnahme der Kupplungshälfte 34 und somit unter Drehung des Kolbens 21 um einen Zahn (bedarfsweise auch um mehrere Zähne) weiterdrehen, um die nächste Schmierposition anzusteuern. Bspw. wird die Steuernut 25 nun in Übereinstimmung mit der Radialbohrung 17b gebracht. Hier wiederholt sich das im Zusammenhang mit der Radialbohrung 17a beschriebene Spiel von neuem. Wie beschrieben können so nacheinander alle Radialbohrungen 17 angesteuert und somit alle Schmierstoffleitungen 5 separat mit geeigneten Ölportionen versorgt werden.

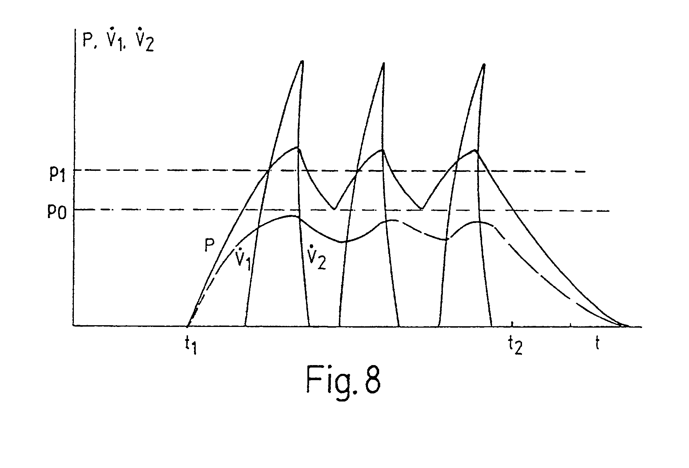

Die Abgabe einer Ölportion kann, wie in Fig. 8 veranschaulicht, impulsweise erfolgen, wobei der von der Pumpeinrichtung 7a aufgebaute Spritzdruck p innerhalb eines Schmierintervalls t₁, t₂ moduliert wird. Dazu wird der Schrittmotor 55 schrittweise angesteuert und bewegt, so dass der Kolben 21 ebenfalls schrittweise bewegt wird. In den kurzen Ruhepausen kann der Druck p jeweils etwas unter einen Druckgrenzwert p₁ abfallen. Bei dem Druckgrenzwert p₁ beginnen die angeschlossenen Düsen zu spritzen. Sinkt der Druck zwischenzeitlich unter diesen Wert z.B. jeweils auf einen etwas geringeren Wert p₀ ab, spritzen die Düsen intermittierend. Der Zustrom v̇₁ zu den Düsen schwankt dadurch und infolge der Elastizität der Leitungen zeitlich. Die Düsen geben den Ölstrom v̇₂ tröpfchenweise als Mikroimpulse ab, so dass der Ölstrom infolge der kurzzeitigen Druckabsenkungen zwischen einzelnen Tropfen Null ist. Auf diese Weise können auch kleine Ölmengen zeitlich gedehnt mit relativ großen, verstopfungsunanfälligen Düsen im Spritzstrahl abgegeben werden.

Bei Inbetriebnahme der Schmiereinrichtung 1 kann zunächst eine Entlüftung der Pumpeinrichtung 7a erforderlich werden. Dazu wird der Kolben 21 in eine Entlüftungsposition gedreht, in der seine Steuernut 25 mit einer Radialbohrung 171 übereinstimmt, die nach außen offen ist und in der kein Rückschlagventil angeordnet ist. Ein oder mehrere vollständige Kolbenhübe bewirken nun das Austreiben von Luft und die Füllung des Pumpvolumens mit Öl. Danach kann der ordentliche Betrieb aufgenommen werden.

Eine abgewandelte Ausführungsform des Sperrmechanismus ist in Figur 8 veranschaulicht. Das Sperr-Rad 46 ist hier als Ratschenrad ausgebildet. Der Sperrriegel 48 ist als Sperrklinke ausgebildet. Es wird dadurch überflüssig, den Zugmagneten für jedes Weiterschalten des Sperr-Rads 46 anzusteuern. Der Sperrriegel 48 ist auf das Sperr-Rad 46 hin federbelastet. Er ermöglicht eine Drehung des Ratschenrads 46 in Uhrzeigerrichtung (Pfeil 70) zur Drehung des Kolbens 21 und somit zur Betätigung des Verteilers. In Gegenrichtung (Pfeil 71) ist jedoch jede Drehung gesperrt, so dass der Pumpvorgang durchgeführt werden kann. Eine Betätigung des Hubmagneten 51 ist nur noch in ganz wenigen Ausnahmefällen erforderlich.

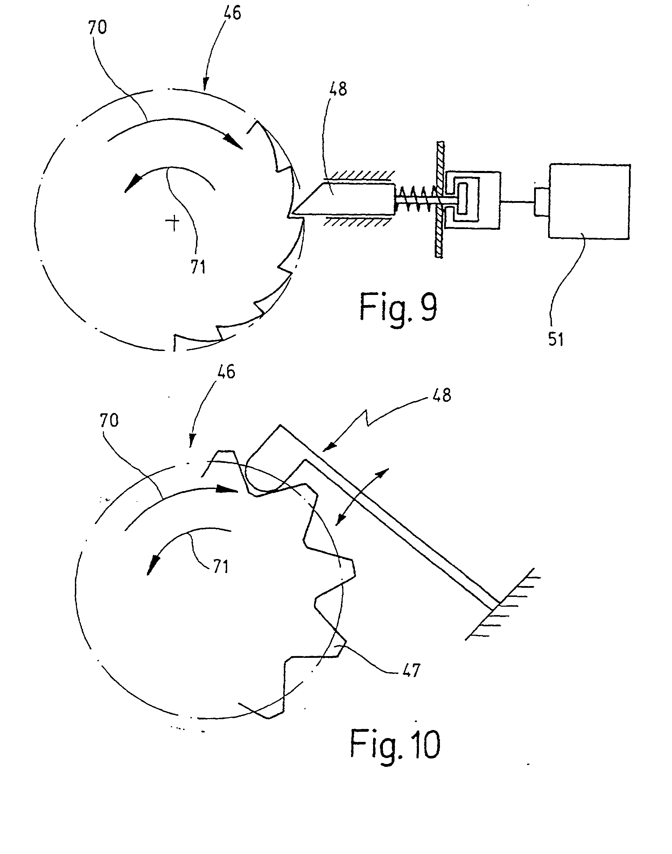

Eine weiter abgewandelte Ausführungsform ist in Fig. 10 veranschaulicht. Die Verzahnung des Sperr-Rads 46 weist Zähne 47 mit einer relativ geringen Flankensteigung auf. Der Sperrriegel 48 ist als in Radialrichtung federnde Klinke ausgebildet. Die Steuerung der Drehbewegung des Kolbens 21 erfolgt bei dieser Ausführungsform, indem der Schrittmotor 55, wenn das Spiel der Kupplungseinrichtung 39 durchlaufen ist, das Rastmoment des Sperrriegels recht- oder linksdrehend überwindet.

Bei einer Schmiereinrichtung für mehrere Schmierstellen, insbesondere zur Schmiermittelversorgung von Strickmaschinen, ist eine Pumpeinrichtung 7a vorgesehen, die zugleich als Verteilereinrichtung 7b dient. Dazu weist die Pumpeinrichtung 7 einen Kolben 21 auf, der mit einer Steuernut 25 versehen ist. Der entsprechende Pumpzylinder weist einen Einlass und mehrere an der Zylinderwandung verteilte Auslässe auf. Je nach dem, mit welchem der Auslässe die Steuernut 25 des Kolbens 21 in Übereinstimmung gebracht ist, wird eine entsprechende Schmierstelle ausgewählt. Die Pumpeinrichtung 7 ist somit zugleich Verteilereinrichtung.

## Patentansprüche

1. Schmiereinrichtung (1) für mehrere Schmierstellen, zur Schmiermittelversorgung mehrerer Schmierstellen einer Strickmaschine,
mit einem Zylinder (8) in dem axial verschiebbar und drehbar ein Kolben (21) gelagert ist, der eine Pumpeinrichtung (7a) zur Schmiermittelförderung und zugleich
eine Verteilereinrichtung (7b) bildet, durch die das von dem Kolben (21) geförderte Schmiermittel auf ein oder mehrere Leitungen (5) einer Gruppe (4) von der Verteilereinrichtung (7) weg führender Leitungen (5) zu leiten ist und die Teil der Pumpeinrichtung (7a) ist,
wobei der Zylinder (8) mehrere Auslasskanäle (17) aufweist, die durch Drehung des Kolbens (21) Steuerbar sind,
mit einer Antriebseinrichtung, zu der eine Dreheinrichtung (55) und eine Verschiebeeinrichtung (44) gehören, die mit dem Kolben (21) verbunden sind,
wobei die Verschiebeeinrichtung (44) durch ein Getriebe gebildet ist, das eine Relativdrehung zwischen dem Kolben (21) und der Dreheinrichtung (55) in eine Linearbewegung des Kolbens (21) umsetzt
und wobei der Kolben (21) mit einer Sperreinrichtung (46, 48) verbunden ist, die dazu dient, den Kolben (21) unter Zulassung einer Axialbewegung in ausgewählten Drehpositionen drehfest zu arretieren,
**dadurch gekennzeichnet,**
**dass** die Dreheinrichtung (55) einen Stellmotor aufweist, der eine gewünschte Drehstellbewegung erzeugt, und
**dass** der Stellmotor mittels einer Kupplungseinrichtung (39) wahlweise drehfest oder mit Drehspiel mit dem Kolben (21) verbindbar ist.

2. Schmiereinrichtung nach Anspruch 1, **dadurch gekennzeichnet, dass** der Zylinder (8) eine zylindrische Zylinderwandung aufweist und dass die Auslasskanäle (17) die Zylinderwandung durchsetzend angeordnet sind.

3. Schmiereinrichtung nach Anspruch 1, **dadurch gekennzeichnet, dass** der Kolben (21) an seiner Mantelfläche (23) mit wenigstens einem Steuerkanal (25) versehen ist.

4. Schmiereinrichtung nach Anspruch 3, **dadurch gekennzeichnet, dass** der Steuerkanal (25) zur Ausbildung der Verteilereinrichtung (7b) durch Drehung des Kolbens (21) in Übereinstimmung mit wenigstens einem der Auslasskanäle bringbar ist.

5. Schmiereinrichtung nach Anspruch 1, **dadurch gekennzeichnet, dass** die Kupplungseinrichtung (39) ein festgelegtes Drehspiel aufweist.

6. Schmiereinrichtung nach Anspruch 1, **dadurch gekennzeichnet, dass** die Sperreinrichtung (46, 48) ein Sperrglied (48) aufweist, das mit einem drehfest mit dem Kolben (21) verbundenen Sperr-Rad (46) in und außer Eingriff bringbar ist.

7. Schmiereinrichtung nach Anspruch 6, **dadurch gekennzeichnet, dass** das Sperrglied (48) mittels eines Stellantriebs (51) in und außer Eingriff mit dem Sperr-Rad (46) überführbar ist.

8. Schmiereinrichtung nach Anspruch 6, **dadurch gekennzeichnet, dass** das Sperr-Rad (46) als Ratschenrad und das Sperrglied (48) als Rastklinke ausgebildet ist (Fig. 9 oder Fig. 10).

9. Schmiereinrichtung nach Anspruch 1, **dadurch gekennzeichnet, dass** die Verschiebeeinrichtung (44) von der Dreheinrichtung (55) betätigt ist.

10. Schmiereinrichtung nach Anspruch 1, **dadurch gekennzeichnet, dass** zu dem Getriebe zwei Gewindeelemente (44, 45) gehören, von denen eines drehfest mit dem Kolben (21) und ein anderes drehfest mit der Dreheinrichtung (55) verbunden ist,

11. Schmiereinrichtung nach Anspruch 10, **dadurch gekennzeichnet, dass** wenigstens eins der Gewindeelemente (44) mit einem Magneten (62) verbunden ist, um die Gewindeelemente (44) gegeneinander vorzuspannen.

12. Schmiereinrichtung nach Anspruch 1, **dadurch gekennzeichnet, dass** eine Steuereinrichtung vorgesehen ist, mit der der Hub des Kolbens (21) festlegbar ist.

13. Schmiereinrichtung nach Anspruch 1, **dadurch gekennzeichnet, dass** ein in den Zylinder (8) führender Einlasskanal (12) und mit den Leitungen (5) verbundene Auslasskanäle (17) jeweils mit einem Rückschlagventil versehen sind.

14. Schmiereinrichtung nach Anspruch 1, **dadurch gekennzeichnet, dass** zur Überwachung der Bewegung des Kolbens (21) eine Sensoreinrichtung (66) vorgesehen ist.

15. Verfahren zum Schmieren von Schmierstellen einer Maschine mittels einer Schmiereinrichtung (1) gemäß Anspruch 1 mit wenigstens einer Pumpe (7a, 7b) über Leitungen (5), wobei bei dem Verfahren Schmiermittel von der Pumpe (7a, 7b) diskontinuierlich über die Leitungen (5) zu den Schmierstellen gefördert wird, und wobei zur Schmiermittelversorgung einer oder mehrerer Schmierstellen die betreffende Leitung (5) bzw. die betreffenden Leitungen (5) von der Pumpe (7a, 7b) mit einem zeitlich schwankenden Druck beaufschlagt werden,
**dadurch gekennzeichnet,**
**dass** der Schmiervorgang einen Druckimpuls beinhaltet, der aus einer Folge von Einzelimpulsen besteht, zwischen denen Druckabfälle zugelassen werden, bei denen ein Minimaldruckniveau nicht unterschritten wird.

## Claims

1. Lubrication device (1) for several lubrication points, for the supply of lubricant to several lubrication points of a knitting machine,
with a cylinder (8), in which a piston (21) is rotatably disposed to be axially displaceable and forms a pumping means (7a) for the transport of lubricant and at the same time
a distribution means (7b), through which the lubricant transported by the piston (21) may be directed onto one or more lines (5) of a group (4) of lines (5) running away from the distribution means (7) and which is part of the pumping device (7a),
wherein the cylinder (8) has several outlet ducts (17), which can be controlled through rotation of the piston (21),
with a drive means, which includes a rotation means (55) and a displacement means (44), which are connected to the piston (21),
wherein the displacement means (44) is formed by a gear, which converts the relative rotation between the piston (21) and the rotation means (55) into a linear movement of the piston (21),
and wherein the piston (21) is connected to a locking means (46, 48), which serves to arrest the piston (21) in selected positions of rotation to be fixed against rotation while allowing an axial movement,
**characterised in that**
the rotation means (55) has a servomotor, which generates a desired rotational control movement, and
that the servomotor can be selectively connected to the piston (21) by means of a coupling means (39) either to be fixed against rotation or with rotational play.

2. Lubrication device according to Claim 1, **characterised in that** the cylinder (8) has a cylindrical cylinder wall, and that the outlet ducts (17) are arranged to pass through the cylinder wall.

3. Lubrication device according to Claim 1, **characterised in that** the piston (21) is provided with at least one control duct (25) on its skirt surface (23).

4. Lubrication device according to Claim 3, **characterised in that** for formation of the distribution means (7b), the control duct (25) can be brought into alignment with at least one of the outlet ducts by rotation of the piston (21).

5. Lubrication device according to Claim 1, **characterised in that** the coupling means (39) has a fixed rotational play.

6. Lubrication device according to Claim 1, **characterised in that** the locking means (46, 48) has a locking member (48), which can be brought into and out of engagement with a locking wheel (46) connected to the piston (21) to be fixed against rotation.

7. Lubrication device according to Claim 6, **characterised in that** the locking member (48) can be moved into and out of engagement with the locking wheel (46) by means of an actuator (51).

8. Lubrication device according to Claim 6, **characterised in that** the locking wheel (46) is configured as a ratchet wheel and the locking member (48) is configured as a pawl (Figure 9 or Figure 10).

9. Lubrication device according to Claim 1, **characterised in that** the displacement means (44) is operated by the rotation means (55).

10. Lubrication device according to Claim 1, **characterised in that** the gear comprises two threaded elements (44, 45), one of which is connected to the piston (21) to be fixed against rotation and another is connected to the rotation means (55) to be fixed against rotation.

11. Lubrication device according to Claim 10, **characterised in that** at least one of the threaded elements (44) is connected to a magnet (62) to prestress the threaded elements (44) relative to one another.

12. Lubrication device according to Claim 1, **characterised in that** a control means is provided, with which the stroke of the piston (21) can be fixed.

13. Lubrication device according to Claim 1, **characterised in that** an inlet duct (12) leading into the cylinder (8) and outlet ducts (17) connected to the lines (5) are respectively provided with a non-return valve.

14. Lubrication device according to Claim 1, **characterised in that** a sensor means (66) is provided to monitor the movement of the piston (21).

15. Method for lubricating lubrication points of a machine by means of a lubrication device (1) according to Claim 1 with at least one pump (7a, 7b) via lines (5), wherein in the method lubricant is transported intermittently by the pump (7a, 7b) via the lines (5) to the lubrication points, and wherein for the supply of lubricant to one or more lubrication points, the respective line (5) or the respective lines (5) are subjected to a temporally fluctuating pressure by the pump (7a, 7b),
**characterised in that**
the lubrication process includes a pressure pulse, which consists of a series of individual pulses, between which drops in pressure are permitted, wherein the pressure does not fall below a minimum pressure level.

## Revendications

1. Dispositif de lubrification (1) pour plusieurs points de graissage, destiné à alimenter en lubrifiant plusieurs points de graissage d'une machine à tricoter, comprenant un cylindre (8), dans lequel est monté avec possibilité de déplacement en translation axiale et de rotation un piston (21) qui constitue un dispositif de pompe (7a) pour assurer le transport du lubrifiant et en même temps un dispositif distributeur (7b) qui sert à amener le lubrifiant refoulé par le piston (21) à une ou plusieurs conduites (5) d'un groupe (4) de conduites (5) partant du distributeur (7) et qui fait partie du dispositif de pompe (7a), le cylindre (8) comportant plusieurs conduits de refoulement (17) qui peuvent être commandés par rotation du piston (21), comprenant un système d'entraînement qui comporte un moyen de mise en rotation (55) et un moyen de déplacement (44) qui sont reliés au piston (21), le moyen de déplacement (44) étant formé d'un mécanisme de transmission qui transforme un mouvement relatif entre le piston (21) et le moyen de mise en rotation (55) en un mouvement linéaire du piston (21), et le piston (21) étant relié à un dispositif de verrouillage (46, 48) qui sert à immobiliser le piston (21) en rotation dans des positions angulaires sélectionnées, en autorisant un mouvement axial,
**caractérisé par le fait que** le moyen de mise en rotation (55) présente un servomoteur qui produit un mouvement souhaité de réglage angulaire et **par le fait que** le servomoteur peut être relié au piston (21) à l'aide d'un moyen d'accouplement (39), au choix de manière solidaire en rotation ou avec un jeu en rotation.

2. Dispositif de lubrification selon la revendication 1, **caractérisé par le fait que** le cylindre (8) présente une paroi cylindrique et que les conduits de refoulement (17) sont disposés de manière à traverser cette paroi cylindrique.

3. Dispositif de lubrification selon la revendication 1, **caractérisé par le fait que** le piston (21) est pourvu d'au moins un conduit de distribution (25) au niveau de sa surface enveloppe (23).

4. Dispositif de lubrification selon la revendication 3, **caractérisé par le fait que** pour former le dispositif distributeur (7b), le conduit de distribution (25) peut être amené en coïncidence avec au moins un des conduits de refoulement, par rotation du piston (21).

5. Dispositif de lubrification selon la revendication 1, **caractérisé par le fait que** le moyen d'accouplement (39) présente un jeu en rotation défini.

6. Dispositif de lubrification selon la revendication 1, **caractérisé par le fait que** le dispositif de verrouillage (46, 48) présente un élément de verrouillage (48) qui peut être amené en prise et hors de prise d'avec une roue de verrouillage (46) liée de façon solidaire en rotation au piston (21).

7. Dispositif de lubrification selon la revendication 6, **caractérisé par le fait que** l'élément de verrouillage (48) peut être amené en prise et hors de prise d'avec la roue de verrouillage (46) à l'aide d'un mécanisme de manoeuvre (51).

8. Dispositif de lubrification selon la revendication 6, **caractérisé par le fait que** la roue de verrouillage (46) est conformée en roue à rochet et l'élément de verrouillage (48) en cliquet d'arrêt (fig. 9 ou 10).

9. Dispositif de lubrification selon la revendication 1, **caractérisé par le fait que** le moyen de déplacement (44) est actionné par le moyen de mise en rotation (55).

10. Dispositif de lubrification selon la revendication 1, **caractérisé par le fait que** le mécanisme de transmission comprend deux éléments filetés (44, 45) dont l'un est solidaire en rotation du piston (21) et l'autre est solidaire en rotation du moyen de mise en rotation (55).

11. Dispositif de lubrification selon la revendication 10, **caractérisé par le fait qu'**au moins un des éléments filetés (44) est relié à un aimant (62) destiné à mettre les éléments filetés (44) sous précontrainte l'un vis-à-vis de l'autre.

12. Dispositif de lubrification selon la revendication 1, **caractérisé par le fait qu'**il est prévu un dispositif de commande qui permet de définir la course du piston (21).

13. Dispositif de lubrification selon la revendication 1, **caractérisé par le fait qu'**un conduit d'admission (12), menant dans le cylindre (8), et des conduits de refoulement (17), reliés aux conduites (5), sont chacun pourvus d'une soupape de non-retour.

14. Dispositif de lubrification selon la revendication 1, **caractérisé par le fait que** pour surveiller le mouvement du piston (21), il est prévu un système de capteur (66).

15. Procédé de lubrification de points de graissage d'une machine à l'aide d'un dispositif de lubrification (1) selon la revendication 1 comprenant au moins une pompe (7a, 7b), via des conduites (5), le procédé consistant à transporter le lubrifiant de façon discontinue depuis la pompe (7a, 7b), via les conduites (5), aux points de graissage et, pour alimenter en lubrifiant un ou plusieurs points de graissage , la ou les conduite(s) (5) concemée(s) étant soumise(s) par la pompe (7a, 7b) à une pression qui varie dans le temps, **caractérisé par le fait que** l'opération de lubrification englobe une impulsion de pression qui est constituée d'une succession d'impulsions isolées, entre lesquelles des baisses de pression sont autorisées, sans passer en dessous d'un niveau de pression minimal.
